**Europäisches Patentamt**

**European Patent Office**

**Office européen des brevets**

(19)

(11) Numéro de publication: **0 180 494**
**B1**

(12) # FASCICULE DE BREVET EUROPEEN

(45) Date de publication du fascicule du brevet:
**22.03.89**

(51) Int. Cl.⁴: **G01N 1/10**

(21) Numéro de dépôt: **85401888.4**

(22) Date de dépôt: **26.09.85**

(54) **Automate programmable pour effectuer le dépôt en position précise sur un support d'analyse d'une infime quantité précise de liquide.**

(30) Priorité: **01.10.84 FR 8415048**

(43) Date de publication de la demande:
**07.05.86 Bulletin 86/19**

(45) Mention de la délivrance du brevet:
**22.03.89 Bulletin 89/12**

(84) Etats contractants désignés:
**BE DE GB**

(56) Documents cités:
**FR-A- 1 401 298**
**FR-A- 2 123 593**
**FR-A- 2 220 779**

(73) Titulaire: **COMMISSARIAT A L'ENERGIE ATOMIQUE, 31/33, rue de la Fédération, F-75015 Paris(FR)**

(72) Inventeur: **Douchy, Marc, 6, rue Raoul Dautry, F-91190 Gif sur Yvette(FR)**
Inventeur: **Lohez, Pierre, 22, rue Eduouard Lockroy, F-75011 Paris(FR)**
Inventeur: **Malecot, Jean-Guy, 11, rue de la Peuplerale, F-91160 Longjumeau(FR)**
Inventeur: **Retail, Gilbert, 28, rue Pierre Geoffroy, F-92700 Colombes(FR)**

(74) Mandataire: **Mongrédien, André et al, c/o BREVATOME 25, rue de Ponthieu, F-75008 Paris(FR)**

ACTORUM AG

**Description**

La présente invention a pour objet un automate programmable pour effectuer le dépôt en position précise sur un support d'analyse d'une infime quantité précise de liquide.

Cet automate est tout particulièrement destiné à alimenter en échantillons successifs déposés sur des supports, des appareils d'analyses successives d'une solution lorsque la quantité de solution à déposer est de faible volume (1 à 20 microlitres).

Cet automate convient également à alimenter des appareils d'analyse en échantillons d'une solution lorsque l'on ne peut ou veut disposer que d'une faible quantité de celle-ci, ce qui peut être le cas en analyse médicale par exemple.

Plus précisément, l'invention a pour but de réaliser un tel automate programmable qui présente simultanément toutes les caractéristiques de performances suivantes:

– l'échantillon doit être prélevé en infime quantité, de l'ordre de quelques petites gouttes, avec une précision et une répétitivité totales du nombre de gouttes,
– le prélèvement de chaque échantillon successif à partir d'un récipient contenant la solution à analyser doit être effectué sans contamination d'un échantillon par le prélèvement de l'échantillon précédent,
– le dépôt de chaque échantillon sur son support associé doit être effectué avec une grande précision et répétitivité pour les échantillons successifs.

Or, on ne connaît pas à ce jour un tel automate programmable présentant toutes ces caractéristiques.

L'invention a dès lors pour but essentiel de proposer un tel nouvel automate.

A cet effet, l'invention a pour objet un automate programmable pour effectuer le dépôt en position précise sur un support d'analyse d'une infime quantité précise, variable et reproductible de liquide caractérisé en ce qu'il comprend en combinaison:

– un support principal muni de moyens de déplacement lui permettant d'occuper successivement au moins cinq positions,
– une seringue à piston montée sur le support principal et munie de moyens de déplacements de cette seringue par rapport audit support principal, de moyens de saisie par une de ses extrémités d'une aiguille creuse de prélèvement de solution, et de moyens de déplacement du piston,
– un distributeur d'une pluralité d'aiguilles creuses de prélèvement muni de moyens pour présenter successivement chaque aiguille en un premier emplacement correspondant à la première position du support porte-seringue, chaque aiguille creuse étant, avant prélèvement de solution, vierge et d'une longueur légèrement supérieure à une longueur ultérieure précise,
– un dispositif de coupe placé en un second emplacement correspondant à la seconde position du support porte-seringue pour couper une aiguille retenue par lesdits moyens de saisie de l'extrémité de la seringue à ladite longueur précise en un point précis de l'espace lorsque le support porte-seringue est placé dans sa seconde position,
– un distributeur d'échantillons de solution à plusieurs logements, muni de moyens pour présenter successivement chaque logement en un troisième emplacement correspondant à la troisième position du support porte-seringue, chaque logement étant prévu pour recevoir avant un cycle complet de fonctionnement de l'automate un échantillon de solution,
– un porte-supports d'analyse muni de moyens de déplacements lui permettant d'occuper trois positions dont la seconde correspond à la quatrième position du support porte-seringue,
– un moyen de préhension des supports d'analyse, un moyen d'extraction des supports d'analyse.
– un distributeur de supports d'analyse vierges à plusieurs logements, muni de moyens pour présenter successivement chaque support d'analyse en un emplacement correspondant à la première position dudit porte-supports d'analyse, chaque logement étant prévu pour recevoir avant un cycle complet de fonctionnement de l'automate un support d'analyse vierge,
– un récepteur de supports d'analyse après dépôt d'échantillon à plusieurs logements, muni de moyens pour présenter successivement chaque logement en un emplacement correspondant à la troisième position dudit porte-supports d'analyse, chaque logement dudit récepteur étant laissé libre avant un cycle complet de fonctionnement de l'automate,
– un extracteur d'aiguilles usagées, placé en un emplacement correspondant à la cinquième position du support porte-seringue, et
– des moyens connus en soi en technologie d'automatismes pour actionner, programmer et positionner les déplacements relatifs et fonctionnements des divers dispositifs et moyens précités constituant par leur combinaison ledit automate.

Pour l'essentiel, cet automate fonctionne de la manière suivante:

– en sa première position, le porte-seringue fait saisir par la seringue une aiguille creuse vierge,
– en sa seconde position, le porte-seringue présente l'extrémité de cette aiguille au dispositif de coupe qui coupe cette aiguille à une longueur précise,
– en la troisième position du porte-seringue, la seringue s'avance vers un logement du distributeur d'échantillons et y plonge l'aiguille creuse vierge. Le piston de la seringue recule alors pour aspirer une quantité précise de la solution de l'échantillon à analyser. La seringue toute entière recule enfin,
– en la quatrième position du porte-seringue, l'extrémité coupée avec précision de l'aiguille creuse chargée du liquide de l'échantillon à analyser vient se placer en une position très précise par rapport à un support d'analyse vierge alors présenté par le porte-supports d'analyse en sa seconde position. Le piston de la seringue avance pas à pas pour déposer un nombre exact voulu et reproductible de gouttes d'échantillon sur le support d'analyse,

– en la cinquième position du porte-seringue, l'extrémité de la seringue est débarassée de son aiguille usagée,

– de son côté, et en coordination temporelle, le porte-supports d'analyse prend, en sa première position, un support d'analyse vierge ; en sa seconde position, il place ce support d'analyse vierge devant l'extrémité coupée de l'aiguille chargée de liquide pour recevoir la quantité infime précise d'échantillon de la solution lorsque le porte-seringue est en sa quatrième position ; enfin, en sa troisième position, le porte-supports d'analyse vient placer un support d'analyse sur lequel un dépôt vient d'être effectué sur le récepteur de supports d'analyse.

L'une des caractéristiques essentielles de cet automate réside dans le choix, non évident, que l'on a fait de réaliser la succession des aiguilles creuses de prélèvement d'échantillon, par tronçonnages successifs à longueur précise de suite d'éléments de tube creux de petit diamètre. On s'affranchit ainsi des dispersions de longueurs d'aiguilles du commerce préfabriquées et l'on est ainsi sûr de la position dans l'espace de l'extrémité de l'aiguille, ce qui est ensuite indispensable pour pouvoir positionner avec une très grande précision cette extrémité par rapport à un support d'analyse.

Selon une autre caractéristique secondaire mais également intéressante, la seringue est montée sur le support principal porte-seringue par l'intermédiaire de moyens élastiques et l'extremité de saisie d'aiguille de la seringue a une forme conique évasée vers l'extérieur et est munie d'au moins un joint torique à friction.

Grâce à ces divers moyens, on conçoit que, lorsque le porte-seringue est dans sa première position et que la seringue avance vers l'emplacement de saisie d'une aiguille creuse vierge de prélèvement du distributeur d'aiguilles successives, le cône évasé de l'extrémité de la seringue assure le positionnement de l'entrée de l'aiguille dans cette extrémité, puis son centrage. Ensuite, l'aiguille entre à friction à l'intérieur du joint torique. L'avancement de la seringue se poursuivant, l'extrémité d'aiguille vient en butée jusqu'au fond de son logement prévu sur l'extrémité de la seringue grâce au montage élastique de la seringue sur son support. Tout cela garantit la bonne mise en place d'une aiguille vierge sur l'extrémité de la seringue et prépare les conditions nécessaires de la coupe ultérieure à longueur précise de cette aiguille, comme indiqué ci-dessus.

Selon une autre caractéristique secondaire mais également intéressante, chaque logement du distributeur d'échantillon est un logement cylindrique à fond muni de moyens élastiques, destiné à recevoir librement un petit récipient correspondant contenant un échantillon, et l'angle que fait avec la verticale l'axe commun du petit récipient et de son logement est supérieur à l'angle que fait avec la verticale l'axe de l'aiguille creuse de prélèvement.

Grâce à cette caractéristique, on conçoit que, lorsque la seringue avance vers un logement du distributeur d'échantillons, on garantit ainsi que l'extrémité d'aiguille du prélèvement va buter au point le plus bas du petit récipient contenant l'échantillon et prélever quelques gouttes de cet échantillon, même si la quantité contenue dans le petit récipient est minime.

A titre d'exemple non limitatif, on décrira maintenant un mode particulier de réalisation de l'invention en se reportant au dessin annexé, sur lequel:

– la figure 1 représente, en perspective, l'ensemble des éléments composants de l'automate programmable de l'invention,

– la figure 2 représente schématiquement, vu en plan, ce même ensemble de composants,

– la figure 3 représente schématiquement en coupe un porte-seringue,

– la figure 4 représente schématiquement en coupe un distributeur d'aiguilles,

– la figure 5 représente schématiquement en coupe un dispositif de coupe à longueur précise d'une aiguille creuse de prélèvement d'échantillon, et

– la figure 6 représente schématiquement en coupe les positions relatives du support porte-seringue respectivement par rapport au distributeur d'échantillons et au porte-supports d'analyse pour les opérations successives correspondant à ces deux positions.

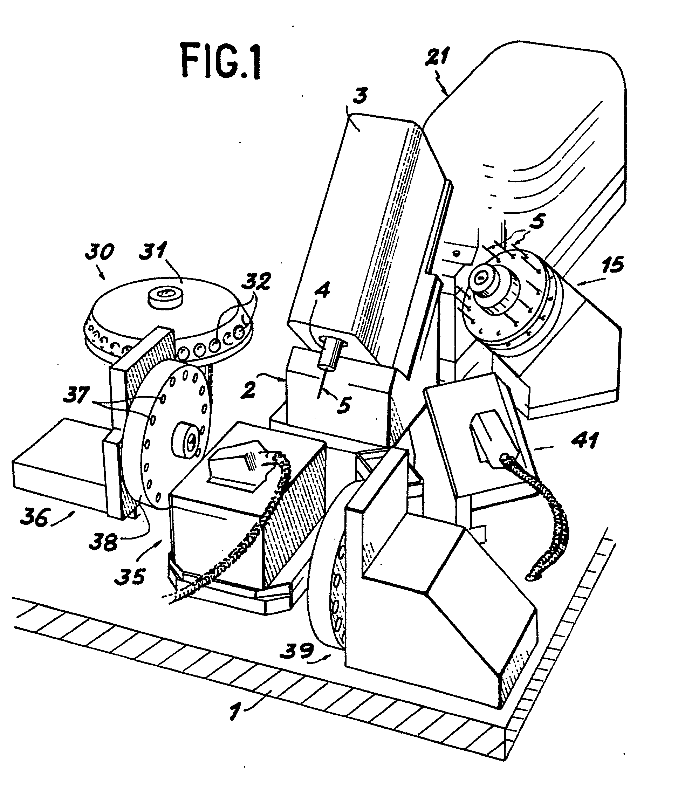

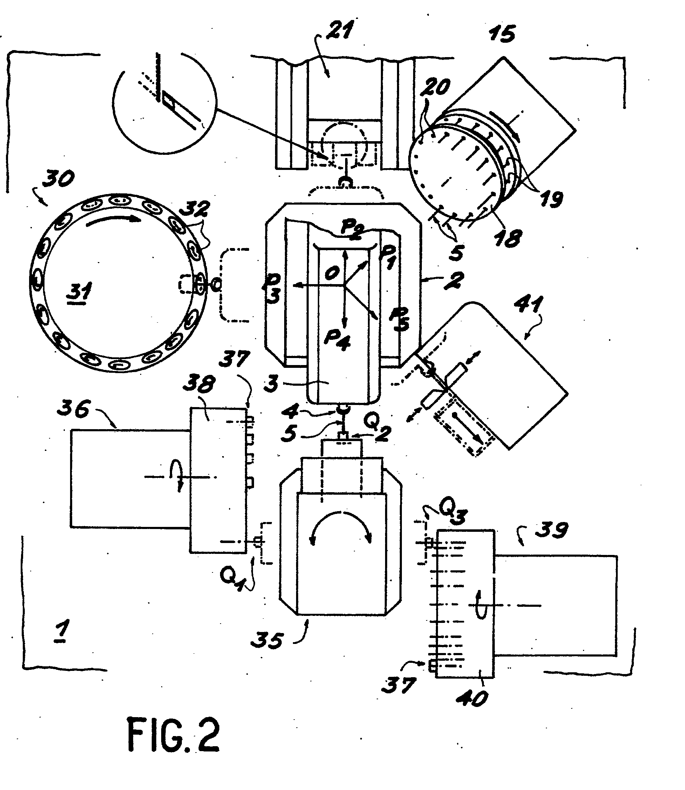

On décrira tout d'abord l'ensemble des composants de l'automate représenté sur les figures 1 et 2.

Cet automate, décrit à titre d'exemple de mise en œuvre de l'invention, fait partie d'un système associé à un appareil d'analyse par spectrométrie de masse à thermoionisation pour la détermination des compositions isotopiques des solides et celle des concentrations chimiques par la technique de la dilution isotopique.

Pour l'étude des solides par spectrométrie de masse à thermoionisation, on est conduit à déposer, sur l'un des filaments d'un pied de source à trois filaments, de faibles quantités ($10^{-2}$ à 10 microgrammes) de l'élément à étudier.

La technique utilisée consiste à mettre en solution acide (en général nitrique 0,2 N) l'élément à étudier et à déposer sur le filament choisi quelques microlitres (1 à 10) de cette solution.

La solution est déposée par fractions (par exemple de 0,5 microlitre) en évaporant à sec, entre chaque fraction déposée, par passage d'un courant électrique dans le filament considéré.

En fin de dépôt, le filament est chauffé, toujours par passage d'un courant électrique, suivant une procédure déterminée pour mettre le dépôt dans l'état chimique le mieux adapté à l'analyse.

Les deux autres filaments, alors connectés en série, sont légèrement chauffés par passage d'un courant électrique pour éviter toutes condensations de produit à leur surface.

Cette technique est utilisée dans les usines de retraitement des combustibles et elle conduit alors à déposer des solutions actives.

C'est dans la perspective d'une automatisation totale de la spectrométrie de masse, utilisée en particulier dans les usines de retraitement, que l'automate des "dépôts automatiques" effectuant toutes les opérations décrites ci-dessus a été mis au point. Cet automate présente plusieurs avantages importants ; en particulier, il permet de diminuer notablement l'irradiation du personnel, d'éviter une tâche fastidieuse répétitive aux opérateurs, d'améliorer la reproductibilité des dépôts, et d'assurer une meilleure utilisation du spectromètre de masse.

Cet automate comprend un ensemble d'éléments mécaniques commandé à partir d'une carte microprocesseur par l'intermédiaire de châssis d'interfaces. Une imprimante permet le dialogue avec l'automate.

Les éléments actifs de l'automate sont évidemment installés en enceinte étanche (boîte à gants).

Compte tenu de l'activité et de l'agressivité chimique des solutions déposées et pour aussi faciliter la maintenance: tous les éléments mécaniques susceptibles d'être placés en dehors de la boîte à gants le sont et les mouvements sont alors transmis par des passages étanches. Les éléments placés à l'intérieur de l'enceinte constituent des modules facilement démontables et sortables; ils sont capotés et protégés par un balayage d'air, par répartition de l'air neuf de balayage de la boîte, au niveau de chaque module.

Les éléments nécessaires l'alimentation électrique, au pilotage et à la commande du robot sont placés dans une baie d'électronique.

Toutes ces dispositions propres à la nucléarisation de n'importe quel appareil utilisé en milieu radioactif sont bien connues en technologie nucléaire et ne seront donc pas décrites plus en détail.

Par contre, on va décrire plus en détail les différents composants mécaniques de l'automate et son mode de fonctionnement.

La partie centrale de l'automate monté sur une table de travail 1, est un support principal constitué d'une tourelle 2 munie de moyens de rotation lui permettant d'occuper successivement cinq positions autour du centre 0 (figure 2), respectivement P1, P2, P3, P4 et P5.

Un porte-seringue 3, portant une seringue 4 terminée par une aiguille 5, est monté mobile sur la tourelle 2 de manière à permettre, pour chaque position de la tourelle P1, P2, P3, P4 ou P5, une avancée ou un recul de la seringue 4 et de son aiguille 5 vers les différents emplacements d'opérations à effectuer correspondant à ces cinq positions, comme on le décrira ci-après.

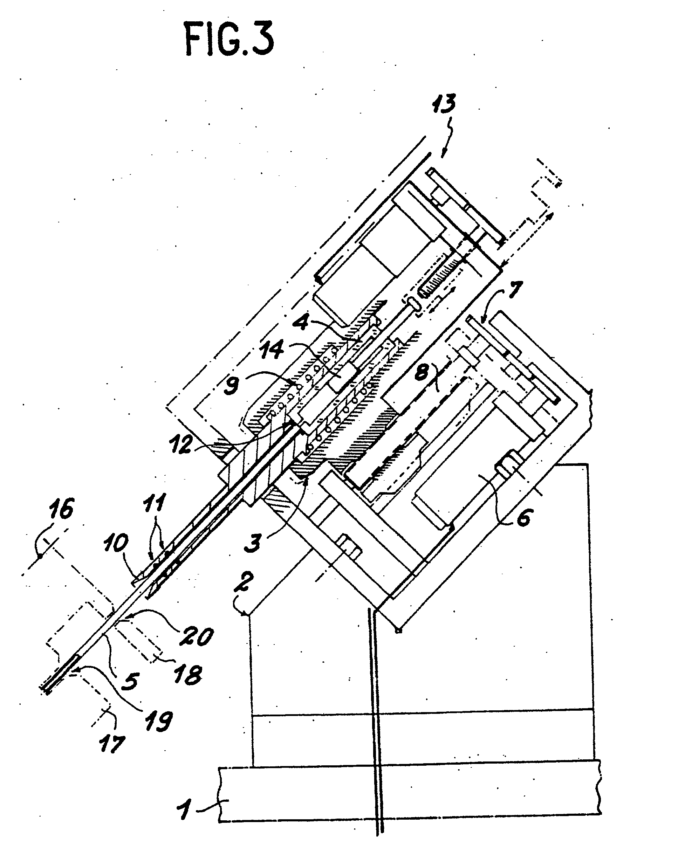

Le porte-seringue est représenté plus en détail sur la figure 3. On y voit la tourelle 2 sur laquelle est monté le porte-seringue 3. Celui-ci est mobile sur la tourelle 2 pour des mouvements d'avancée ou de recul grâce à l'action d'un moteur 6 et d'un réducteur 7 actionnant une barre filetée 8 commandant ces mouvements du porte-seringue dans des glissières prévues à cet effet.

La seringue 4 proprement dite est elle-même montée sur son porte-seringue 3 par l'intermédiaire de moyens élastiques schématisés par le ressort 9.

L'extrémité avant 10 de la seringue a une forme conique évasée vers l'extérieur et est équipée de deux joints toriques à friction 11. Ces moyens assurent, comme exposé ci-dessus, le guidage à l'entrée de la seringue de l'extrémité d'aiguille lorsque la seringue s'approche de cette extrémité, le centrage de l'aiguille, et sa saisie et retenue par les joints toriques 11. Quand le mouvement d'avance de la seringue vers l'aiguille se poursuit, la tête d'aiguille finit par venir en butée sur un épaulement 12 de la seringue et une avancée supplémentaire de la seringue provoque un déplacement de cette seringue par rapport au porte-seringue 3 par suite de la compression du ressort 9.

Un ensemble moteur-réducteur 13 permet de déplacer le piston 14 à l'intérieur de la seringue 4.

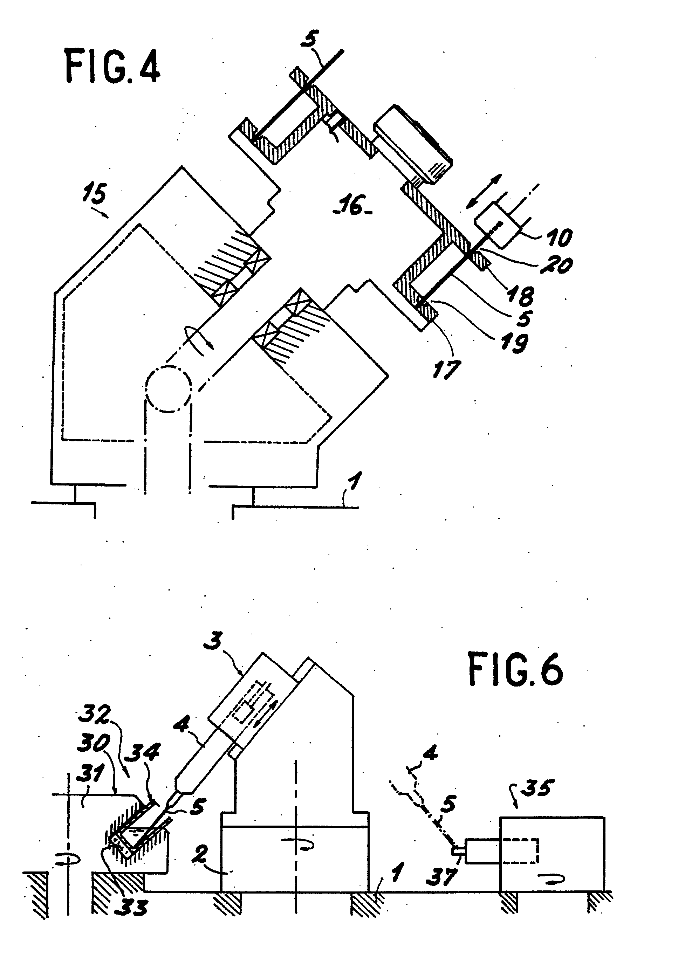

L'automate comprend ensuite un distributeur d'une pluralité d'aiguilles creuses de prélèvement d'échantillon référencé 15 sur les figures 1 et 2 et représenté plus en détail sur la figure 4. Ce distributeur, selon cet exemple, comporte essentiellement un tourillon 16 présentant une couronne circulaire d'embase 17 et une collerette circulaire frontale 18 percées d'une série respective de logements 19 et trous 20 selon plusieurs positions, par exemple au nombre de 32.

Avant un cycle complet de fonctionnement de l'automate, le distributeur d'aiguilles 15 est chargé de 32 aiguilles 5 creuses vierges d'une longueur légèrement supérieure à une longueur ultérieure précise, comme on le verra ci-après. La prise de l'aiguille s'opère lorsque la tourelle centrale 2 est orientée vers sa position P1 et comme cela a déjà été décrit en référence à la figure 3.

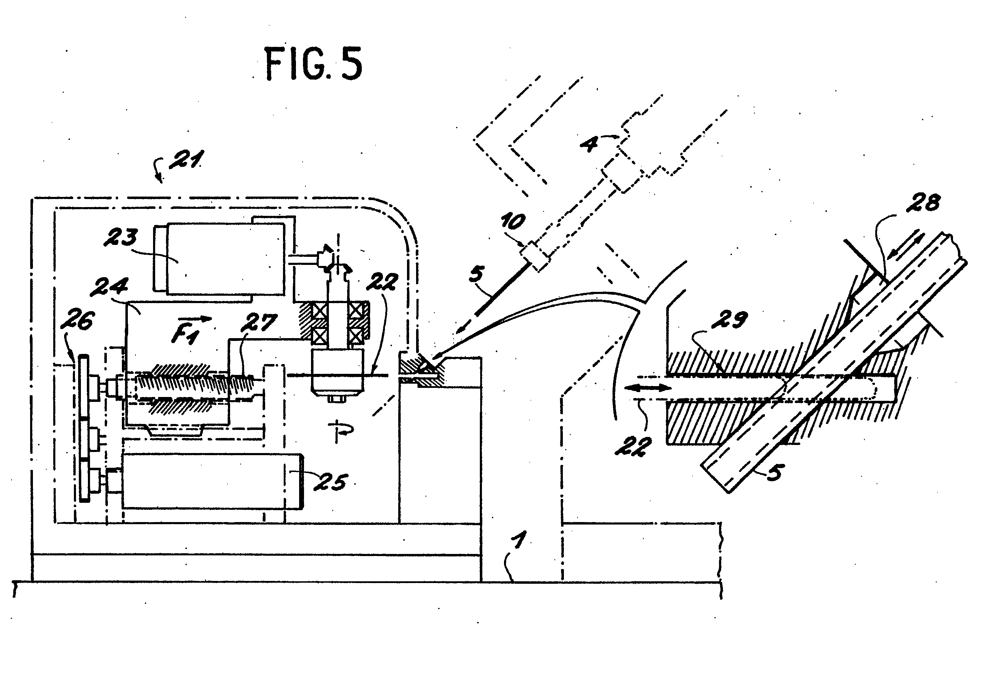

L'automate comprend ensuite un dispositif de coupe d'aiguilles référencé en 21 sur les figures 1 et 2 et représenté plus en détail sur la figure 5. Ce dispositif est prévu pour collaborer avec la tourelle porte-seringue 2 lorsque celle-ci est orientée en sa position P2.

Le dispositif de coupe 21 comprend essentiellement une fraise rotative de tronçonnage 22, entrainée par un moteur 23 monté sur un support 24 susceptible lui-même d'avancer ou reculer sous la commande d'un moteur 25 entraînant par un réducteur 26 une barre filetée 27 de contrôle de ces mouvements.

Lorsque la tourelle est en position P2 et que le porte-seringue 3 s'avance vers le bas selon l'orientation de son axe incliné à 45°, l'extrémité brute de l'aiguille 5 vierge, qui a été saisie juste précédemment comme on vient de le décrire, est alors introduite dans un logement approprié de guidage à entrée tronconique 28 du dispositif de coupe dont le détail à échelle agrandie est donné à droite de la figure 5. La fraise de tronçonnage est alors en position extrême gauche comme représenté sur la figure 5. Lorsque l'aiguille vierge et brute est ainsi introduite à fond, le moteur 23 se met en route et fait tourner la fraise 22 et l'ensemble des organes 25, 26, 27 se déplace alors vers la droite, comme l'indique la flèche f1; 1a fraise 22 pénètre et avance dans la fente de guidage 29 pour couper en biseau en un point précis de l'espace l'extrémité de l'aiguille 5. La fraise revient ensuite en position gauche et le porte-seringue retire en arrière l'aiguille coupée à longueur précise.

L'automate comprend ensuite un distributeur d'échantillons successifs à analyser référencé en 30 sur les figures 1 et 2 et représenté également schématiquement en coupe sur la figure 6.

Ce distributeur d'échantillons, destiné à collaborer avec la tourelle porte-seringue 2 lorsque celle-ci se trouve orientée en sa position P3, comprend essentiellement un tourillon circulaire d'axe vertical 31 présentant à sa périphérie une pluralité, trente deux dans cet exemple, de logements cylindriques d'axe incliné de 60° par rapport à la verticale. Chaque logement 32 est muni sur son fond d'une revêtement élastique souple 33. L'échantillon liquide est contenu dans des petits récipients en verre 34.

Avant un cycle complet d'analyses, le distributeur d'échantillons 30 est chargé de ces trente deux petits récipients 34.

L'inclinaison relative des axes de l'aiguille 5 et des récipients 34 reposant en outre sur les fonds élastiques 33 des logements 32 fait que l'on est certain que l'extrémité d'aiguille de prélèvement 5 vient se placer, en fin de course de la seringue 4, au point le plus bas du récipient 34, ce qui garantit la bonne prise d'échantillon même si le récipient 34 n'en contient qu'une très petite quantité. Plus précisément, l'axe de descente de l'aiguille coupe le plan de fond du récipient 34 au point inférieur de ce récipient.

Le piston 14 de la seringue remonte alors de n pas, un pas correspondant par exemple à 0,5 microlitre et le nombre maximal de pas n étant de 15, soit correspondant à 7,5 microlitres. La seringue remonte, puis recule. Pour être certain de restituer la totalité de la solution prélevée, un recul préalable du piston avant prélèvement permet de redescendre ce dernier à une position inférieure à celle du début de prélèvement.

L'aiguille qui bute sur le fond du bécher provoque un recul élastique de la seringue mais ne modifie pas la position de l'aiguille au repos. Le nombre de pas de prélèvement est limité par la capacité de l'aiguille pour éviter toute pollution d'un échantillon par les précédents (aiguille à usage unique, seul élément de prélèvement en contact avec la solution à déposer).

L'automate vient ensuite se placer en position P4 en regard d'un porte-supports d'analyse référencé 35 sur les figures 1, 2 et 6 (à droite sur cette figure).

Ce porte-supports d'analyse 35 est muni de moyens de rotation lui permettant d'occuper successivement une première position P1 (figure 2) en regard d'un distributeur de supports d'analyse vierges 36.

Dans l'application particulière décrite, ces supports d'analyse 37 sont des filaments de pieds de source pour spectrométrie de masse à thermoionisation.

Dans une autre application, médicale par exemple, il pourra s'agir de plaques de dépôt en verre. Dans tous les cas, le distributeur de supports d'analyse 36 pourra être d'un genre comprenant un tourillon 38 à une pluralité de positions, trente deux dans cet exemple.

Lorsque le porte-support d'analyse 35 a saisi, en sa première position P1, un support d'analyse 37, il tourne alors pour venir se placer en sa position P2 qui correspond à la position P4 de la tourelle porte-seringue 2, comme représenté schématiquement sur la partie droite de la figure 6.

Le porte-seringue 3 avance vers le porte-filament 35. La seringue 4 descend.

Par réglage des butées d'avance du porte-seringue et du porte-filament, on amène, la seringue étant en position basse, à faire coïncider le centre du bout de l'aiguille 5 avec le centre du filament. Le piston 14 descend d'un pas, formant une goutte qui touche le filament au bout de l'aiguille 5. La seringue 4 remonte laissant une goutte sur le filament. Le filament est chauffé pour évaporer la goutte. La seringue descend de nouveau ...etc... Si le prélèvement est de n pas, le dépôt s'effectuera en n+3 pas, de façon à être certain de restituer sur le filament la totalité de la solution à déposer. Les deux premiers pas de descente du piston servent à rattraper les jeux mécaniques et à compenser les phénomènes de capillarité dans l'aiguille. La goutte n'apparaît donc qu'au troisième pas. Le dépôt terminé au n+3ième pas et la seringue en position haute, on effectue le recuit désiré par l'opérateur. Ensuite, s'opère le recul du porte-seringue 3 et du porte-filament 35.

En ce qui concerne le porte-support d'analyse 35, il s'oriente ensuite vers sa position P3 (figure 2) en regard d'un extracteur 39 de support d'analyse après dépôt sur ce support d'un échantillon de solution à analyser.

Ce récepteur est du genre comportant un tourillon 40 à plusieurs positions, trente deux dans cet exemple, présentées successivement en position P3 du porte-supports d'analyse 35 pour recevoir les supports après dépôt d'échantillon.

En ce qui concerne la tourelle porte-seringue 2, après dépôt de l'échantillon de solution sur son support en position P4, elle s'oriente ensuite vers sa position P5 pour collaborer avec un extracteur d'aiguilles usagées 41 qui arrache, de l'extrémité de seringue, cette aiguille usagée.

L'ensemble des composants de l'automate décrit ci-dessus est associé avec un ensemble de butées de fin de course actionnant des interrupteurs signalant les états physiques d'emplacements de ces composants. En outre, des moyens connus en soi en technologie d'automatismes actionnent et programment les déplacements relatifs et les fonctionnements des divers dispositifs et moyens qui, en combinaison entre eux, constituent l'automate programmable objet de l'invention. Il est évident que, par rapport à la description précédente d'un exemple particulier de réalisation, il est possible d'envisager bien des variantes de tel ou tel composant particulier de l'automate tout en gardant l'idée inventive directrice de la combinaison de moyens fonctionnels qui constitue la structure conceptuelle de cet automate.

## Revendications

1. Automate programmable pour effectuer le dépôt en position précise sur un support d'analyse d'une infime quantité précise de liquide, caractérisé en ce qu'il comprend, en combinaison:
   - un support principal (2) muni de moyens de déplacement lui permettant d'occuper successivement au moins cinq positions (P1, P2, P3, P4 et P5),
   - une seringue (4) à piston (14) montée sur le support principal (2) et munie de moyens (6, 7, 8) de déplacement de cette seringue (4) par rapport audit support principal (2) de moyens de saisie (10, 11) par une de ses extrémités d'une aiguille creuse de prélèvement de solution (5) et de moyens (13) de déplacement du piston,

— un distributeur (15) d'une pluralité d'aiguilles creuses de prélèvement muni de moyens (16) pour présenter successivement chaque aiguille (5) en un premier emplacement correspondant à la première position (P1) du support porte-seringue (2), chaque aiguille creuse étant, avant prélèvement de solution, vierge et d'une longueur légèrement supérieure à une longueur ultérieure précise,

— un dispositif de coupe (21) placé en un second emplacement correspondant à la seconde position (P2) du support porte-seringue (2) pour couper une aiguille retenue par lesdits moyens de saisie de l'extrémité de la seringue à ladite longueur précise en un point précis de l'espace lorsque le support porte-seringue est placé dans sa seconde position,

— un distributeur (30) d'échantillons de solution à plusieurs logements, muni de moyens pour présenter successivement chaque logement (32) en un troisième emplacement correspondant à la troisième position (P3) du support porte-seringue (2), chaque logement étant prévu pour recevoir avant un cycle complet de fonctionnement de l'automate un échantillon de solution,

— un porte-supports d'analyse (35) muni de moyens de déplacements lui permettant d'occuper trois positions (P1, P2, et P3) dont la seconde (P2) correspond à la quatrième position (P4) du support porte-seringue (2),

— un moyen de préhension des supports d'analyse, un moyen d'extraction des supports d'analyse,

— un distributeur (36) de supports d'analyse vierges à plusieurs logements, muni de moyens pour présenter successivement chaque support d'analyse (37) en un emplacement correspondant à la première position (P1) dudit porte-supports d'analyse, chaque logement étant prévu pour recevoir avant un cycle complet de fonctionnement de l'automate un support d'analyse vierge,

— un récepteur (39) de supports d'analyse après dépôt d'échantillon à plusieurs logements, muni de moyens pour présenter successivement chaque logement en un emplacement correspondant à la troisième position (P3) dudit porte-supports d'analyse (35), chaque logement dudit récepteur étant laissé libre avant un cycle complet de fonctionnement de l'automate,

— un extracteur (39) d'aiguilles usagées, placé en un emplacement correspondant à la cinquième position (P5) du support porte-seringue, et

— des moyens connus en soi en technologie d'automatismes pour actionner, programmer et positionner les déplacements relatifs et fonctionnements des divers dispositifs et moyens précités constituant par leur combinaison ledit automate.

2. Automate programmable selon la revendication 1, caractérisé en ce que la seringue (4) est montée sur le support principal porte-seringue (2) par l'intermédiaire de moyens élastiques (9) et que l'extrémité de saisie d'aiguille de la seringue (4) a une forme conique évasée vers l'extérieur (10) et est munie d'au moins un joint torique à friction (11).

3. Automate programmable selon la revendication 1, caractérisé en ce que chaque logement du distributeur d'échantillon (30) est un logement cylindrique à fond muni de moyens élastiques (33) destiné à recevoir librement un petit récipient correspondant (34) contenant un échantillon, et que l'angle que fait avec la verticale l'axe commun du petit récipient et de son logement est supérieur à l'angle que fait avec la verticale l'axe de l'aiguille creuse de prélèvement.

## Patentansprüche

1. Programmierbarer Automat zum Aufbringen einer genau definierten Kleinstmenge einer Flüssigkeit auf eine bestimmte Stelle eines Analyseträgers, enthaltend in Kombination:

— einen Hauptträger (2), der mit Verstelleinrichtungen versehen ist, die es ihm erlauben, nacheinander wenigstens fünf Positionen (P1, P2, P3, P4 und P5) einzunehmen,

— eine Spritze (4) mit einem Kolben (14), die auf dem Hauptträger (2) montiert ist und mit Einrichtungen (6, 7, 8) zum Verstellen dieser Spritze (4) gegenüber dem Hauptträger (2), mit Einrichtungen (10, 11) zum Ergreifen einer hohlen Nadel (5) zur Abgabe von Lösung mittels einer ihrer Enden und mit Einrichtungen (13) zum Verschieben des Kolbens versehen ist,

— einen Verteiler (15) für mehrere hohle Abgabenadeln, der mit Einrichtungen (16) versehen ist, um nacheinander jede Nadel (5) an einem ersten Platz entsprechend der ersten Position (P1) des Spritzenträgers (2) anzubieten, wobei jede hohle Nadel vor der Abgabe von Lösung unbenutzt ist und eine Länge aufweist, die leicht größer als eine genaue Endlänge ist,

— eine Schneideinrichtung (21), die an einer zweiten Stelle entsprechend der zweiten Position (P2) des Spritzenträgers (2) angeordnet ist, um eine von den genannten Greifeinrichtungen am Ende der Spritze gehaltene Nadel auf die genannte genaue Länge in einem genauen Punkt des Zwischenraums zu schneiden, wenn der Spritzenträger sich in seiner zweiten Position befindet,

— einen Verteiler (30) für Lösungsmeßmengen mit mehreren Aufnahmen, der mit Einrichtungen versehen ist, um nacheinander jede Aufnahme (32) einem dritten Platz anzubieten, der der dritten Position (P3) des Spritzenträgers (2) entspricht, wobei jede Aufnahme dazu vorgesehen ist, nach einem vollständigen Funktionszyklus des Automaten eine Meßmenge der Lösung aufzunehmen,

— einen Analysenträger-Träger (35), der mit Verstelleinrichtungen versehen ist, die es ihm erlauben, drei Positioinen (P1, P2 und P3) einzunehmen, von denen die zweite (P2) der vierten Position (P4) des Spritzenträgers (2) entspricht,

— eine Greifeinrichtung für die Analysenträger, eine Extraktionseinrichtung für die Analysenträger,

— einen Verteiler (36) für unbenutzte Analysenträger auf verschiedene Aufnahmen, der mit Einrichtungen versehen ist, um nacheinander jeden Analysenträger (37) an einem Platz, der der ersten Position (P1) des Analysenträger-Trägers entspricht, anzubieten, wobei jede Aufnahme dazu vorgesehen ist, nach einem vollständigen Funktionszyklus des Automaten einen unbenutzten Analysenträger aufzunehmen,

— einen Empfänger (39) für die Analysenträger nach der Aufbringung der Meßmenge mit mehreren Aufnahmen, der mit Einrichtungen versehen ist, um nacheinander jede Aufnahme an einem Platz, der der dritten Position (P3) des Analysenträger-Trägers (35) entspricht, anzubieten, wobei jede Aufnahme des genannten Empfängers vor einem vollständigen Funktionszyklus des Automaten freigelassen ist,

— einen Abwerfer (39) für benutzte Nadeln, der an einer Stelle angeordnet ist, die der fünften Position (P5) des Spritzenträgers entspricht, und

— in der Automatentechnologie an sich bekannte Einrichtungen, um die Relativverstellungen und Funktionen der verschiedenen vorgenannten Vorrichtungen und Einrichtungen, die in ihrer Kombination den Automaten bilden, zu betätigen zu programmieren und zu positionieren.

2. Programmierbarer Automat nach Anspruch 1, dadurch gekennzeichnet, daß die Spritze (4) auf dem Spritzenhauptträger (2) mittels elastischer Einrichtungen (9) gehalten ist und daß das Ende der Spritze (4) zum Ergreifen der Nadel eine nach außen erweiterte konische Form (10) hat und mit wenigstens einer toroidförmigen Reibungskupplung (11) versehen ist.

3. Programmierbarer Automat nach Anspruch 1, dadurch gekennzeichnet, daß jede Aufnahme des Meßmengenverteilers (30) eine zylindrische Aufnahme ist, die am Boden mit elastischen Einrichtungen (33) versehen ist, die dazu bestimmt sind, einen entsprechenden kleinen Behälter (34) frei aufzunehmen, der eine Meßmenge enthält, und daß der Winkel, den die gemeinsame Achse des kleinen Behälters und seine Aufnahme mit der Vertikalen einschließt, größer als der Winkel ist, den die Achse der hohlen Abgabenadel mit der Vertikalen einschließt.

**Claims**

1. Programmable automatic means for carrying out the deposition of a precise position on an analytical support of a minute, precise quantity of liquid, characterized in that it comprises in combination:

— a main support (2) provided with displacement means enabling it to successively occupy at least five positions (P1, P2, P3, P4 and P5),

— a piston (14) syringe (4) mounted on the main support (2) and provided with means (6, 7, 8) for displacing said syringe (4) relative to said main support (2), and means (10, 11) for grasping a hollow solution sampling needle (5) by one of its ends and means (13) for displacing the piston;

— a distributor (15) of a plurality of hollow sampling needles provided with means (16) for successively presenting each needle (5) at a first location corresponding to the first position (P1) of the syringe-holder support (2), whereby prior to sampling the solution each hollow needle is new and has a length slightly exceeding the subsequent precise length,

— a cutting device (21) placed in a second position (P2) corresponding to the second position of the syringe-holder support (2) for cutting the needle held by said syringe end gripping means to the precise length at a precise point in space, when the syringe holder support is placed in its second position,

— a solution sample distributor (30) having several recesses provided with means for successively presenting each recess at a third location corresponding to the third position (P3) of the syringe holder support (2), each recess (32) serving to receive a solution sample prior to a complete operating cycle of the automatic means,

— an analysis or analytical support holder (35) provided with displacement means enabling it to occupy three positions (P1, P2 and P3), whereof the second (P2) corresponds to the fourth position (P4) of the syringe holder support (2),

— a means for gripping the analytical supports and a means for extracting the analytical supports,

— a new analytical support distributor (36) having a plurality of recesses, provided with means for successively presenting each analytical support (32) at a location corresponding to the first position of said analytical support holder, each recess serving to receive a new analytical support before a complete operating cycle of the automatic means,

— a receiver (39) for analytical supports following sample deposition having several recesses, provided with means for successively presenting each recess at a location corresponding to the third position (P3) of said analytical support holder (35), each recess of the receiver being left free prior to a complete operating cycle of the automatic means,

— a used needle extractor (39), placed at a location corresponding to the fifth position (P5) of the syringe holder support, and

— per se known means in automatic equipment technology for actuating, programming and positioning the relative displacements and operations of the various devices and means referred to hereinbefore, which, by their combination, form the aforementioned automatic means.

2. Programmable automatic means according to claim 1, characterized in that the syringe (4) is mounted on the main syringe holder support (2) via elastic means (9) and in that the needle gripping end of the syringe (4) has an outwardly (10) widened conical shape and it is provided with at least one friction O-ring (11).

3. Programmable automatic means according to claim 1, characterized in that each recess of the sample distributor (30) is a cylindrical recess, whose bottom is provided with elastic means (33) for freely receiving a small corresponding container (34) containing a sample and wherein the angle formed by the common axis of the small container and its recess with the vertical is greater than the angle formed by the axis of the hollow sampling needle with the vertical.

# FIG.1

FIG.2

# FIG.3

# FIG.4

# FIG.6

FIG.5